# EUROPÄISCHE PATENTSCHRIFT

(11) **EP 1 084 207 B1**
(45) Veröffentlichungstag und Bekanntmachung des Hinweises auf die Patenterteilung: **07.08.2002**
(21) Anmeldenummer: 99924848.7
(22) Anmeldetag: 30.04.1999
(51) Int. Cl.: C09K 5/04, F25J 1/02

(54) **VERFAHREN ZUR KÄLTEERZEUGUNG IM TEMPERATURBEREICH VON 90 BIS 110 K.**
METHOD FOR PRODUCING COLD IN A TEMPERATURE RANGE OF 90 TO 110 K.
PROCEDE DE PRODUCTION DE FROID DANS LA PLAGE DE TEMPERATURE DE 90 A 110 K.

(30) Priorität: 12.05.1998 DE 19820960; 13.05.1998 DE 19821272
(43) Veröffentlichungstag der Anmeldung: 21.03.2001
(73) Patentinhaber: MESSER GRIESHEIM GMBH, 60547 Frankfurt (DE)
(72) Erfinder: ALEXEEV, Alexander, D-01159 Dresden (DE); QUACK, Hans, D-01069 Dresden (DE)
(86) Internationale Anmeldenummer: EP9902931
(87) Internationale Veröffentlichungsnummer: WO9958624

(56) Entgegenhaltungen:
- EP-A- 0 271 989
- GB-A- 1 336 892
- US-A- 3 817 046
- US-A- 3 970 441
- US-A- 5 063 747
- US-A- 5 337 572
- US-A- 5 441 658

## Beschreibung

Die Erfindung betrifft ein Verfahren zur Kälteerzeugung im Temperaturbereich von 90 bis 110 K.

Nach dem Stand der Technik sind Verfahren bekannt, um im Temperaturbereich von 65 bis 150 K Kälte zu erzeugen. Bei diesen Verfahren wird ein gasförmiges Kältemittel in einem Kompressor von einem relativ geringen Druck (Niederdruck) auf einen relativ hohen Druck (Hochdruck) verdichtet und in einem Nachkühler auf Umgebungstemperatur abgekühlt. Anschließend wird das verdichtete Kältemittel im Hochdruckstrom in einem Wärmeübertrager im Gegenstrom zu dem noch nicht verdichteten Kältemittel abgekühlt und schließlich mit Hilfe eines Drosselventils in das Zweiphasengebiet des Kältemittels entspannt. Nach der Entspannung wird der flüssige Anteil des Kältemittels in einem Verdampfer unter Aufnahme der Kälteleistung teilweise verdampft. Das aus dem Verdampfer kommende Kältemittel wird im Niederdruckstrom dem Gegenstrom-Wärmeübertrager zugeführt und darin durch das verdichtete Kältemittel aufgewärmt. Anschließend wird das aufgewärmte Kältemittel dem Kompressor wieder zugeleitet.

Als Kältemittel werden oft Gemische aus Gasen mit Normalsiedetemperaturen unter 320 K verwendet. Dazu gehören zum Beispiel Wasserstoff, Stickstoff, Sauerstoff, Edelgase, Kohlenwasserstoffe und halogenierte Kohlenwasserstoffe. Die zuvor beschriebenen Verfahren werden bei einer Verwendung derartiger Stoffgemische als Kältemittel als "Gemisch-Joule-Thomson-Verfahren" bezeichnet.

Für die Verdichtung des Kältemittels ist es vorteilhaft, einen ölgeschmierten Verdichter einzusetzen. Der wartungsfreie Zeitraum für ölgeschmierte Verdichter ist mit über 20000 Betriebsstunden relativ lang. Dadurch wird ein hohe Zuverlässigkeit der gesamten Kälteanlage gewährleistet, denn es sind keine weiteren Komponenten mit mechanisch bewegten Bauteilen vorhanden.

Die Verwendung eines ölgeschmierten Verdichters ist mit dem Nachteil verbunden, daß Öl aus dem Verdichter in das Kältemittel gelangen kann und so in den Kältekreislauf verschleppt werden kann. Gelangt das Öl in den kalten Teil der Kälteanlage, dann friert es bei den im Verdampfer auftretenden tiefen Temperaturen aus und verstopft den Verdampfer. Dem Verdichter müssen daher entsprechende Bauteile nachgeschaltet werden, um Öl aus dem Kältemittel nach dessen Verdichtung abzuscheiden. Aufgrund der relativ hohen Temperaturen des verdichteten Kältemittels sind in der Regel sowohl aerosole, als auch dampfförmige Ölanteile in dem Kältemittel vorhanden. Als Reinigungseinheit kann vorteilhaft ein Flüssigkeitsölabscheider mit Ölrückführung in den Verdichter und ein nachgeschalteter Adsorber zum Entfernen von dampfförmigen Ölanteilen und noch verbliebenen feinsten Tröpfchen eingesetzt werden. Diese Anordnung wurde bereits beschrieben (R. C. Longsworth, M. J. Boiarski, L.A. Klusmier, 80 K Closed Cycle Throttle Refrigerator, Proceedings of the 8^{th} International Cryocooler Conference, Vail Co., June 1994).

Die Effektivität eines Gemisch-Joule-Thomson-Verfahrens hängt stark von der Zusammensetzung des Kältemittelgemisches ab. Bei der ständigen Zirkulation des Kältemittelgemisches werden höhersiedende Komponenten im Adsorber mehr und mehr adsorbiert, so daß die Gesamtzusammensetzung sich verändert. Die Änderung der Zusammensetzung führt zu einer wesentlichen Verschlechterung der Charakteristika des Systems und die erforderliche Kälteleistung oder Kühltemperatur werden nicht mehr erreicht. Eine Erneuerung des Kältemittelgemisches ist dann notwendig.

Für die thermodynamische Effektivität des Kreislaufs des Kältemittelgemisches ist es wichtig, bestimmte Zusammensetzungen des Kältemittelgemisches zu verwenden. Hauptkriterium zur Auswahl der Zusammensetzung ist die Größe und Verteilung der Temperaturdifferenz zwischen Hoch- und Niederdruckstrom im Joule-Thomson-Wärmeübertrager. Die Temperaturdifferenz soll möglichst gering und die Verteilung der Temperaturdifferenz im Wärmeubertrager soll möglichst gleichmäßig sein.

Kältemittelgemische, die eine besonders günstige Temperaturdifferenzverteilung im Wärmeübertrager bieten, sind vor dem Eintritt in den Joule-Thomson-Wärmeübertrager meist nicht gasförmig, sondern teilweise verflüssigt. Dies wird durch Zugabe von höhersiedenden Komponenten, wie zum Beispiel Propan oder iso-Butan erreicht (A. Alexeev, H. Quack, Ch. Haberstroh, Low cost mixture Joule Thomson Refrigerator, Cryogenics, Proceedings of the 16^{th} International Cryogenic Engineering Conference, Kitakyushu, Japan, 1996).

Die höhersiedenden Gemisch-Komponenten besitzen in der Regel auch eine höhere Gefriertemperatur. Bei tiefen Temperaturen im Kaltteil können diese Komponenten ausfrieren und den Verdampfer verstopfen. Aus diesem Grund sollte der Anteil von höhersiedenden Komponenten im Kältemittelgemisch möglichst gering sein. Die Vorteile des Einsatzes von Kältemittelgemischen werden so nicht voll genutzt, die potentiell vorhandene Effektivität wird nicht erreicht. Das ist ein weiterer Nachteil der im Stand der Technik bekannten Gemisch-Joule-Thomson-Verfahren.

Die Aufgabe der Erfindung besteht darin, ein Verfahren zur Kälteerzeugung mit einer Gemischzusammensetzung zu finden, die es ermöglicht, gleichzeitig die Effektivität der Anlage zur Kälteerzeugung zu erhöhen und die Gefahr des Ausfrierens von Gemischbestandteilen bei tiefen Temperaturen im Kaltteil der Anlage zu reduzieren.

Erfindungsgemäß wird die Aufgabe durch ein Kältemittelgemisch gelöst, welches 0,06 mol/mol bis 0,20 mol/mol Propan, 0,26 mol/mol bis 0,36 mol/mol Stickstoff. 0,20 mol/mol bis 0,38 mol/mol Methan, Rest Ethan enthält und das in einem Verfahren zur Kälteerzeugung im Temperaturbereich von 90 bis 110 K, eingesetzt wird, bei dem das Kältemittelgemisch mit einem ölgeschmierten Verdichter verdichtet wird, anschließend auf Umgebungstemperatur abgekühlt wird und anschließend Öl aus dem Kältemittelgemisch abgetrennt wird, bevor das Kältemittelgemisch einem Joule-Thomson-Wärmeübertrager zugeführt wird, und bei dem das Kältemittelgemisch nach dessen Abkühlung auf Umgebungstemperatur und vor dem Eintritt in den Joule-Thomson-Wärmeübertrager zusätzlich gekühlt wird.

Der Vorteil des Kältemittelgemisches liegt darin, daß die Anforderungen bezüglich der Temperaturverteilung erfüllt werden und daß sich eine günstige Temperaturdifferenz, das bedeutet eine relativ gleichmäßige und relativ geringe Temperaturdifferenz im Joule-Thomson-Wärmeübertrager einstellt.

Nach der Erfindung betragen die Anteile im Kältemittelgemisch, bezogen auf ein Mol Kältemittelgemisch,

| | | |
|---|---|---|
| an Stickstoff | von | z_{N2}= 1.07 z_{C3H8} + (0.022Pₕ - 0.14) mol/mol |
| | bis | z_{N2}= 1.23 z_{C3H8} + (0.022Pₕ - 0.14) mol/mol, |
| | | |
| an Propan | von | z_{C3H8} = 0.27 - Pₕ/100±0.02 (Hochdruck in bar), |
| | | |
| an Methan | von | z_{CH4} = (2.2 - 0.07Pₕ)z_{C3H8} +(Pₕ- 2)/100 mol/mol |
| | bis | z_{CH4} = (2.8 - 0.1Pₕ)z_{C3H8}+(Pₕ-1)/100 mol/mol, |

Rest Ethan.

Hier bedeutet Pₕ der Druck für den Hochdruckbereich des Gemisch-Drossel-Prozesses.

Nach der Erfindung weist das Kältemittelgemisch vor Eintritt in den Joule-Thomson-Wärmetauscher eine Temperatur von 233 bis 243 K auf.

Es ist nach der Erfindung vorgesehen, daß der Druck das Kältemittelgemisches vor dessen Verdichtung 1 bis 3 bar, vorzugsweise 1,5 bis 2,5 bar und besonders bevorzugt 1,6 bis 1,8 bar, beträgt und daß das Kältemittelgemisch nach dessen Verdichtung einen Druck von 10 bis 28 bar, vorzugsweise 12 bis 18 bar und besonders bevorzugt 14 bis 16 bar, ausweist.

Die Vorrichtung für die zusätzliche Abkühlung wird hier Ölkondensator genannt Denn überraschenderweise kondensieren durch die relativ geringe zusätzliche Abkühlung in beträchtlichem Maße vorteilhaft weitere Ölanteile aus dem Kältemittelstrom.

Bei dem Verfahren wird nach der Erfindung das Kältemittelgemisch nach dessen Abkühlung auf Umgebungstemperatur und vor der Ölabtrennung zusätzlich gekühlt

Nach der Erfindung ist es vorgesehen, daß bei dem Verfahren das Kältemittelgemisch nach der Abtrennung des Öls und vor dem Eintritt in den Joule-Thomson-Wärmeübertrager zusätzlich gekühlt wird. Dazu wird nach der Abtrennung des Öls der Kältemittelstrom vorteilhaft in einem weiteren Wärmeübertrager gekühlt, so daß das Kältemittel im Joule-Thomson-Wärmeübertrager teilweise verflüssigt vorliegt Die Wärmeübertrager zur Kühlung des Hochdruckstromes unter die Umgebungstemperatur beziehen ihre Kälteleistung vorteilhaft von einer zusätzlichen Kälteanlage.

Nach der Erfindung werden bei dem Verfahren nach der Abkühlung des Kältemittelgemisches auf Umgebungstemperatur überwiegend flüssige Ölanteile aus dem Kältemittelgemisch abgetrennt Wenn der Partialdruck der Öldämpfe im Strom des verdichteten Kältemittelgemischs nach dem Flüssigkertsölabscheider weniger als ca. 10⁻³ mbar beträgt oder wenn die gewünschte Verdampfungstemperatur über 120 K liegt, dann kann bei dem erfindungsgemäßen Verfahren vorteilhaft nur mit einem Flüssigkeitsölabscheider als Abtrennungsstufe für Öl schon eine technisch sinnvolle Reinheit des Kältemittelgemisches erzielt werden.

Erfindungsgemäß ist es bei dem Verfahren ebenso vorgesehen, nach der Abtrennung des überwiegend flüssigen Ölanteils aus dem Kältemittelgemisch anschließend den überwiegend dampfförmigen Ölanteil aus dem Kältemittelgemisch abzutrennen. Die Abtrennung erfolgt vorteilhaft mit einem Flüssigkeitsölabscheider und nachgeschaltetem Adsorber, wobei in dem Flüssigkeitsölabscheider die im Kältemittelstrom enthaltenen Öltröpfchen abgeschieden werden und der verbleibende Kältemittelstrom mit nunmehr geringen dampfförmigen Ölanteilen in einem Adsorber weiter gereinigt wird. Die Öldämpfe aus dem Kältemittelgas nach der Verdichtung kondensieren relativ gut aus und werden im Flüssigkeitsölabscheider relativ gut abgeschieden. Die Konzentration des Restöls im gasförmigen Kältemittelgemisch nach dem Flüssigkeitsölabscheider ist relativ gering, wodurch der Adsorber wesentlich entlastet wird. Der Adsorber wird von relativ kaltem Kältemittelgemisch durchflossen und dadurch gekühlt. So vergrößert sich die spezifische Kapazität des Adsorptionsmittels des Adsorbers gegenüber Verfahren nach dem Stand der Technik und der Wartungszeitraum des Adsorbers und damit der gesamten Vorichtung zur Kälteerzeugung wird verlängert.

Die Erfindung wird nun anhand von Tabellen für vorteilhafte Kältemittelgemisch-Zusammensetzungen beispielhaft näher erläutert:

**Tabellen:**

| Gemischzusammensetzungen für das Kältemittelgemisch nach der Erfindung, optimiert für bestimmte Werte für den Hochdruck und Niederdruck des Gemisch-Drossel-Prozesses und für eine Vorkühltemperatur von ca. 243 K (-30° C). | | | | | | |
|---|---|---|---|---|---|---|
| Bezeichnungen: | | | | | | |
| **ND = 1,6 bar** | **HD = 12 bar** | | | | | |
| Propan, mol/mol | | 0,14 | 0,16 | 0,18 | | |
| Stickstoff, mol/mol | | 0,289 | 0,311 | 0,313 | | |
| Methan, mol/mol | | 0,293 | 0,318 | 0,385* | | |
| Ethan, mol/mol | | 0,278 | 0,211 | 0,122 | | |
| q, kJ/mol | | 1,084 | 1,235 | 1,215 | | |
| | | | | | | |
| **ND = 1,8 bar** | **HD = 12 bar** | | | | | |
| Propan, mol/mol | | 0,14 | 0,16 | 0,18 | | |
| Stickstoff, mol/mol | | 0,288 | 0,31 | 0,306 | | |
| Methan, mol/mol | | 0,304 | 0,329 | 0,409* | | |
| Ethan, mol/mol | | 0,268 | 0,201 | 0,105 | | |
| q, kJ/mol | | 1,029 | 1,177 | 1,126 | | |
| | | | | | | |
| **ND = 2 bar** | **HD = 12 bar** | | | | | |
| Propan, mol/mol | | 0,14 | 0,16 | 0,18 | | |
| Stickstoff, mol/mol | | 0,286 | 0,309 | 0,319 | | |
| Methan, mol/mol | | 0,313 | 0,339 | 0,329 | | |
| Ethan, mol/mol | | 0,261 | 0,192 | 0,172 | | |
| q, kJ/mol | | 0,977 | 1,21 | 1,079 | | |
| | | | | | | |
| **ND = 2,2 bar** | **HD = 12 bar** | | | | | |
| Propan, mol/mol | | 0,14 | 0,16 | 0,18 | | |
| Stickstoff, mol/mol | | 0,286 | 0,309 | 0,306 | | |
| Methan, mol/mol | | 0,321 | 0,347 | 0,431* | | |
| Ethan, mol/mol | | 0,253 | 0,184 | 0,083 | | |
| q, kJ/mol | | 0,932 | 1,07 | 0,944 | | |
| | | | | | | |
| **ND = 2,4 bar** | **HD = 12 bar** | | | | | |
| Propan, mol/mol | | | 0,16 | | | |
| Stickstoff, mol/mol | | | 0,31 | | | |
| Methan, mol/mol | | | 0,353 | | | |
| Ethan, mol/mol | | | 0,177 | | | |
| q, kJ/mol | | | 1,02 | | | |
| | | | | | | |
| **ND = 2,6 bar** | **HD = 12 bar** | | | | | |
| Propan, mol/mol | | | 0,16 | | | |
| Stickstoff, mol/mol | | | 0,311 | | | |
| Methan, mol/mol | | | 0,359 | | | |
| Ethan, mol/mol | | | 0,17 | | | |
| q, kJ/mol | | | 0,981 | | | |
| | | | | | | |
| **ND = 1,6 bar** | **HD = 14 bar** | | | | | |
| Propan, mol/mol | | 0,1 | 0,12 | 0,14 | 0,16 | |
| Stickstoff, mol/mol | | 0,295 | 0,318 | 0,337 | 0,337 | |
| Methan, mol/mol | | 0,245 | 0,267 | 0,295 | 0,359 | |
| Ethan, mol/mol | | 0,36 | 0,295 | 0,228 | 0,144 | |
| q, kJ/mol | | 1,092 | 1,248 | 1,374 | 1,393 | |
| | | | | | | |
| **ND = 1,8 bar** | **HD = 14 bar** | | | | | |
| Propan, mol/mol | | 0,1 | 0,12 | 0,14 | 0,16 | |
| Stickstoff, mol/mol | | 0,293 | 0,317 | 0,336 | 0,335 | |
| Methan, mol/mol | | 0,253 | 0,275 | 0,303 | 0,375 | |
| Ethan, mol/mol | | 0,354 | 0,288 | 0,221 | 0,13 | |
| q, kJ/mol | | 1,044 | 1,197 | 1,323 | 1,312 | |
| | | | | | | |
| **ND = 2 bar** | **HD = 14 bar** | | | | | |
| Propan, mol/mol | | 0,1 | 0,12 | 0,14 | 0,16 | |
| Stickstoff, mol/mol | | 0,292 | 0,315 | 0,335 | 0,339 | |
| Methan, mol/mol | | 0,26 | 0,283 | 0,31 | 0,389* | |
| Ethan, mol/mol | | 0,348 | 0,282 | 0,215 | 0,112 | |
| q, kJ/mol | | 0,998 | 1,144 | 1,27 | 1,231 | |
| | | | | | | |
| **ND = 2,2 bar** | **HD = 14 bar** | | | | | |
| Propan, mol/mol | | | 0,1 | 0,12 | 0,14 | 0,16 |
| Stickstoff, mol/mol | | | 0,291 | 0,315 | 0,344 | 0,344 |
| Methan, mol/mol | | | 0,265 | 0,291 | 0,314 | 0,294 |
| Ethan, mol/mol | | | 0,344 | 0,274 | 0,202 | 0,202 |
| q, kJ/mol | | | 0,953 | 1,096 | 1,217 | 1,122 |
| | | | | | | |
| **ND = 2,4 bar** | **HD = 14 bar** | | | | | |
| Propan, mol/mol | | | 0,1 | 0,12 | 0,14 | 0,16 |
| Stickstoff, mol/mol | | | 0,292 | 0,315 | 0,335 | 0,343 |
| Methan, mol/mol | | | 0,27 | 0,297 | 0,327 | 0,383* |
| Ethan, mol/mol | | | 0,338 | 0,268 | 0,198 | 0,114 |
| q, kJ/mol | | | 0,914 | 1,052 | 1,171 | 1,089 |
| | | | | | | |
| **ND = 2,6 bar** | **HD = 14 bar** | | | | | |
| Propan, mol/mol | | | | 0,12 | 0,14 | 0,16 |
| Stickstoff, mol/mol | | | | 0,316 | 0,335 | 0,345 |
| Methan, mol/mol | | | | 0,301 | 0,333 | 0,38 |
| Ethan, mol/mol | | | | 0,263 | 0,192 | 0,115 |
| q, kJ/mol | | | | 1,009 | 1,122 | 1,022 |
| | | | | | | |
| **ND = 1,6 bar** | **HD = 16 bar** | | | | | |
| Propan, mol/mol | 0,06 | 0,08 | 0,1 | 0,12 | 0,14 | 0,16 |
| Stickstoff, mol/mol | 0,289 | 0,313 | 0,337 | 0,352 | 0,359 | 0,346 |
| Methan, mol/mol | 0,201 | 0,224 | 0,243 | 0,274 | 0,319 | 0,409* |
| Ethan, mol/mol | 0,45 | 0,383 | 0,32 | 0,254 | 0,182 | 0,085 |
| q, kJ/mol | 1,031 | 1,19 | 1,343 | 1,451 | 1,514 | 1,397 |
| | | | | | | |
| **ND = 1,8 bar** | **HD = 16 bar** | | | | | |
| Propan, mol/mol | 0,06 | 0,08 | 0,1 | 0,12 | 0,14 | 0,16 |
| Stickstoff, mol/mol | 0,287 | 0,312 | 0,336 | 0,352 | 0,358 | 0,355 |
| Methan, mol/mol | 0,207 | 0,23 | 0,25 | 0,28 | 0,329 | 0,391* |
| Ethan, mol/mol | 0,446 | 0,378 | 0,314 | 0,248 | 0,173 | 0,094 |
| q, kJ/mol | 0,986 | 1,142 | 1,293 | 1,405 | 1,453 | 1,329 |
| | | | | | | |
| **ND = 2 bar** | **HD = 16 bar** | | | | | |
| Propan, mol/mol | 0,06 | 0,08 | 0,1 | 0,12 | 0,14 | 0,16 |
| Stickstoff, mol/mol | 0,286 | 0,311 | 0,335 | 0,352 | 0,357 | 0,358 |
| Methan, mol/mol | 0,212 | 0,236 | 0,256 | 0,287 | 0,34 | 0,396* |
| Ethan, mol/mol | 0,442 | 0,373 | 0,309 | 0,241 | 0,163 | 0,086 |
| q, kJ/mol | 0,943 | 1,097 | 1,247 | 1,358 | 1,393 | 1,238 |
| | | | | | | |
| **ND = 2,2 bar** | **HD = 16 bar** | | | | | |
| Propan, mol/mol | 0,06 | 0,08 | 0,1 | 0,12 | 0,14 | 0,16 |
| Stickstoff, mol/mol | 0,285 | 0,31 | 0,334 | 0,352 | 0,357 | 0,355 |
| Methan, mol/mol | 0,217 | 0,242 | 0,262 | 0,292 | 0,349 | 0,412* |
| Ethan, mol/mol | 0,438 | 0,368 | 0,304 | 0,236 | 0,154 | 0,073 |
| q, kJ/mol | 0,903 | 1,052 | 1,203 | 1,314 | 1,335 | 1,136 |
| | | | | | | |
| **ND = 2,4 bar** | **HD = 16 bar** | | | | | |
| Propan, mol/mol | | 0,08 | 0,1 | 0,12 | 0,14 | 0,16 |
| Stickstoff, mol/mol | | 0,31 | 0,334 | 0,352 | 0,356 | 0,358 |
| Methan, mol/mol | | 0,246 | 0,268 | 0,298 | 0,359 | 0,411* |
| Ethan, mol/mol | | 0,364 | 0,298 | 0,23 | 0,145 | 0,071 |
| q, kJ/mol | | 1,014 | 1,16 | 1,27 | 1,274 | 1,066 |
| | | | | | | |
| **ND = 2,6 bar** | **HD = 16 bar** | | | | | |
| Propan, mol/mol | | 0,08 | 0,1 | 0,12 | 0,14 | |
| Stickstoff, mol/mol | | 0,31 | 0,335 | 0,353 | 0,357 | |
| Methan, mol/mol | | 0,25 | 0,272 | 0,302 | 0,365 | |
| Ethan, mol/mol | | 0,36 | 0,293 | 0,225 | 0,138 | |
| q, kJ/mol | | 0,973 | 1,119 | 1,227 | 1,217 | |

| | | | | | | |
|---|---|---|---|---|---|---|
| HD Hochdruck ND Niederdruck q spezifische Kälteleistung des Kreislaufs bei einer Kühltemperatur von 100 K * Vergleichsuersuch | | | | | | |

## Patentansprüche

1. Verfahren zur Kälteerzeugung im Temperaturbereich von 90 bis 110 K, bei dem ein Kältemittelgemisch mit einem ölgeschmierfen Verdichter verdichtet wird, anschließend auf Umgebungstemperatur abgekühlt wird und anschließend Öl aus dem Kältemittelgemisch abgetrennt wird, bevor das Kältemittelgemisch einem Joule-Thomson-Wärmeübertrager zugeführt wird, und bei dem das Kältemittetgemisch nach dessen Abkühlung auf Umgebungstemperatur und vor dem Eintritt in den Joule-Thomson-Wärmeübertrager zusätzlich gekühlt wird, wobei als Kältemittelgemisch ein Gemisch aus 0,06 mol/mol bis 0,20 mol/mol Propan, 0,26 mol/mol bis 0,36 mol/mol Stickstoff, 0,20 mol/mol bis 0,38 mol/mol Methan, Rest Ethan eingesetzt wird.

2. Verfahren nach Anspruch 1,
**dadurch gekennzeichnet,**
**daß** das Kältegemisch Anteile
| | | |
|---|---|---|
| an Stickstoff | von | z_{N2}= 1.07 z_{C3H8} + (0.022Pₕ - 0.14) mol/mol |
| | bis | z_{N2}= 1.23 z_{C3H8} + (0.022Pₕ - 0.14) mol/mol, |
| | | |
| an Propan | von | z_{C3H8} = 0.27 - Pₕ/100 ± 0.02 (Hochdruck in bar), |
| | | |
| an Methan | von | z_{CH4} = (2.2 - 0.07Pₕ)z_{C3H8} +(Pₕ - 2)/100 mol/mol |
| | bis | z_{CH4} = (2.8 - 0.1Pₕ)z_{C3H8} +(Pₕ-1)/100 mol/mol, |
Rest Ethan, enthält

3. Verfahren nach Anspruch 1 oder 2,
**dadurch gekennzeichnet,**
**daß** das Kältegemisch vor Eintritt in den Joule-Thomson-Wärmetauscher eine Temperatur von 233 bis 243 K aufweist.

4. Verfahren nach einem der Ansprüche 1 bis 3,
**dadurch gekennzeichnet,**
**daß** das Kältegemisch vor dessen Verdichtung einen Druck von 1 bis 3 bar, vorzugsweise 1,5 bis 2,5 bar und besonders bevorzugt 1,6 bis 1,8 bar aufweist und daß das Kältegemisch nach dessen Verdichtung einen Druck von 10 bis 28 bar, vorzugsweise 12 bis 18 bar und besonders bevorzugt 14 bis 16 bar, aufweist.

5. Verfahren nach einem der vorhergehenden Ansprüche,
**dadurch gekennzeichnet,**
**daß** das Kältemittelgemisch nach dessen Abkühlung auf Umgebungstemperatur und vor der Ölabtrennung zusätzlich gekühlt wird.

6. Verfahren nach einem der Ansprüche 1 bis 4,
**dadurch gekennzeichnet,**
**daß** das Kältemittelgemisch nach der Abtrennung des Öls und vor dem Eintritt in den Joule-Thomson-Wärmeübertrager zusätzlich gekühlt wird.

7. Verfahren nach einem der vorhergehenden Ansprüche,
**dadurch gekennzeichnet,**
**daß** nach der Abkühlung des Kältemittelgemisches auf Umgebungstemperatur überwiegend flüssige Ölanteile aus dem Kältemittelgemisch abgetrennt werden.

8. Verfahren nach Anspruch 7,
**dadurch gekennzeichnet,**
**daß** bei dem Verfahren nach der Abtrennung des überwiegend flössigen Ölanteils aus dem Kältemittelgemisch anschließend der überwiegend
dampfförmige Ölanteil aus dem Kältemittelgemisch abgetrennt wird.

## Claims

1. Process for refrigeration in the temperature range from 90 to 110 K, in which are refrigerant mixture is compressed using an oil-lubricated compressor, is then cooled to ambient temperature and then oil is separated out of the refrigerant mixture before the refrigerant mixture is fed to a Joule-Thomson heat exchanger, and in which the refrigerant mixture, after it has been cooled to ambient temperature and before it enters the Joule-Thomson heat exchanger, is additionally cooled, the refrigerant mixture used being a mixture of 0.06 mol/mol to 0.20 mol/mol of propane, 0.26 mol/mol to 0.36 mol/mol of nitrogen, 0.20 mol/mol to 0.38 mol/mol of methane, remainder ethane.

2. Process according to Claim 1, **characterized in that** the refrigerating mixture contains fractions
| | | |
|---|---|---|
| of nitrogen | from | Z_{N2} = 1.07Z_{C3H8}+(0.022Pₕ-0.14)mol/mol |
| | to | Z_{N2} = 1.23Z_{C3H8}+(0.022Pₕ-0.14)mol/mol, |
| | | |
| of propane | of | Z_{C3H8} = 0.27-Pₕ/100±0.02 (high pressure in bar), |
| of methane | from | Z_{CH4} = (2.2-0.07Pₕ) Z_{C3H8}+ (Pₕ-2)/100 mol/mol |
| | to | Z_{CH4} = (2.8-0.1Pₕ) Z_{C3H8}+ (Pₕ-1)/100 mol/mol |
remainder ethane.

3. Process according to Claim 1 or 2, **characterized in that** the refrigerating mixture is at a temperature of from 233 to 243 K before it enters the Joule-Thomson heat exchanger.

4. Process according to one of Claims 1 to 3, **characterized in that** the refrigerating mixture, before being compressed, is at a pressure of from 1 to 3 bar, preferably 1.5 to 2.5 bar, particularly preferably 1.6 to 1.8 bar and **in that** the refrigerating mixture, after it has been compressed, is at a pressure from 10 to 28 bar, preferably 12 to 18 bar, and particularly preferably 14 to 16 bar.

5. Process according to one of the preceding claims, **characterized in that** the refrigerant mixture, after it has been cooled to ambient temperature and before the separation of the oil, is cooled further.

6. Process according to one of Claims 1 to 4, **characterized in that** the refrigerant mixture, after the oil has been separated out and before it enters the Joule-Thomson heat exchanger, is cooled further.

7. Process according to one of the preceding claims, **characterized in that**, after the refrigerant mixture has been cooled to ambient temperature, predominantly liquid oil fractions are separated out of the refrigerant mixture.

8. Process according to Claim 7, **characterized in that** in the process, after the predominantly liquid oil fraction has been separated out of the refrigerant mixture, the oil fraction which is predominantly in vapour form is then separated out of the refrigerant mixture.

## Revendications

1. Procédé de production de froid dans le domaine de température de 90 à 110 K, lors duquel un mélange d'agents réfrigérants est comprimé dans un compresseur lubrifié à l'huile, est ensuite refroidi à la température ambiante et lors duquel l'huile est ensuite séparée du mélange d'agents réfrigérants, avant de conduire le mélange d'agents réfrigérants à un dispositif de transfert de chaleur Joule-Thomson, et lors duquel le mélange d'agents réfrigérants subit un refroidissement supplémentaire après son refroidissement à la température ambiante et avant l'entrée dans le dispositif de transfert de chaleur Joule-Thomson, un mélange de 0,06 mole/mole jusqu'à 0,20 mole/mole de propane, de 0,26 mole/mole jusqu'à 0,36 mole/mole d'azote, de 0,20 mole/mole jusqu'à 0,38 mole/mole de méthane, avec, pour restant, de l'éthane, étant utilisé en tant que mélange d'agents réfrigérants.

2. Procédé selon la revendication 1, **caractérisé en ce que** le mélange réfrigérant contient des proportions
| | |
|---|---|
| en azote | de: Z_{N2} = 1,07 Z_{C3H8} + (0,022Pₕ -0,14)mole/mole à : Z_{N2} = 1,23 Z_{C3H8} + (0,022Pₕ -0,14)mole/mole, |
| en propane | de: Z_{C3H8} = 0,27 -Pₕ/100 ± 0,02 (haute pression en bars), |
| en méthane | de: Z_{CH4} = (2,2-0, 07Pₕ) Z_{C3H8} +(Pₕ-2)/100 mole/mole à: Z_{CH4} = (2,8-0,1Pₕ)Z_{C3H8} + (Pₕ-1)/100 mole/mole, le reste étant de l'éthane. |

3. Procédé selon la revendication 1 ou 2, **caractérisé en ce que** le mélange réfrigérant présente, avant l'entrée dans le dispositif échangeur de chaleur Joule-Thomson, une température de 233 à 243 K.

4. Procédé selon l'une quelconque des revendications 1 à 3, **caractérisé en ce que** le mélange réfrigérant présente, avant sa compression, une pression de 1 à 3 bars, de préférence de 1,5 à 2,5 bars et en particulier de préférence de 1,6 à 1,8 bars et **en ce que** le mélange réfrigérant présente, après sa compression, une pression de 10 à 28 bars, de préférence de 12 à 18 bars et en particulier de préférence de 14 à 16 bars.

5. Procédé selon l'une quelconque des revendications précédentes, **caractérisé en ce que** le mélange d'agents réfrigérants subit un refroidissement supplémentaire, après son refroidissement à la température ambiante et avant la séparation de l'huile.

6. Procédé selon l'une quelconque des revendications 1 à 4, **caractérisé en ce que** le mélange d'agents réfrigérants subit un refroidissement supplémentaire, après la séparation de l'huile et avant l'entrée dans le dispositif de transfert de chaleur Joule-Thomson.

7. Procédé selon l'une quelconque des revendications précédentes, **caractérisé en ce que** l'on sépare du mélange d'agents réfrigérants, après le refroidissement du mélange d'agents réfrigérants à la température ambiante, des portions d'huile essentiellement liquides.

8. Procédé selon la revendication 7, **caractérisé en ce que** l'on sépare ensuite du mélange d'agents réfrigérants, lors du procédé suivant la séparation de la portion d'huile essentiellement liquide du mélange d'agents réfrigérants, la portion d'huile qui se présente essentiellement sous forme de vapeur.
